# EUROPÄISCHE PATENTSCHRIFT

(11) **EP 1 931 951 B1**
(45) Veröffentlichungstag und Bekanntmachung des Hinweises auf die Patenterteilung: **01.08.2012**
(21) Anmeldenummer: 06806948.3
(22) Anmeldetag: 03.10.2006
(51) Int. Cl.: G01F 13/00, G01G 11/08, B65B 1/10, B65B 1/32, B65B 39/00, B65B 39/12

(54) **DOSIEREINRICHTUNG FÜR PULVER- ODER PASTENFÖRMIGE SUBSTANZEN**
DOSING DEVICE FOR POWDERY OR PASTY SUBSTANCES
DISPOSITIF DE DOSAGE POUR SUBSTANCES PULVERULENTES OU PATEUSES

(30) Priorität: 03.10.2005 EP 05109150; 03.10.2005 EP 05109151
(43) Veröffentlichungstag der Anmeldung: 18.06.2008
(73) Patentinhaber: Mettler-Toledo AG, 8606 Greifensee (CH)
(72) Erfinder: LÜCHINGER, Paul, 8610 Uster (CH); ZEISS, Siegfried, 8633 Wolfhausen (CH)
(86) Internationale Anmeldenummer: PCT/EP2006/067007
(87) Internationale Veröffentlichungsnummer: WO 2007/039611

(56) Entgegenhaltungen:
- EP-A- 0 654 422
- DE-A1- 19 841 478
- GB-A- 701 572
- US-A- 2 084 029
- PATENT ABSTRACTS OF JAPAN Bd. 009, Nr. 177 (P-375), 23. Juli 1985 (1985-07-23) -& JP 60 052724 A (NIPPON KOKAN KK), 26. März 1985 (1985-03-26)

## Beschreibung

Die Erfindung betrifft eine Dosiereinrichtung für pulver- oder pastenförmige Substanzen, welche einen mit einem Quell- oder Entnahmegefäss verbindbaren oder mit diesem verbundenen Dosierkopf aufweist.

Solche Dosiereinrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiereinrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches mit dem Dosierkopf in Verbindung steht und für das Dosieren mit diesem eine Einheit - die Dosiereinrichtung - bildet. Dabei ist es wünschenswert, die zu dosierende Substanz durch eine kleine Öffnung der Dosiereinrichtung auszutragen, so dass sie auch gezielt in ein Gefäss mit einem kleinen Öffnungsquerschnitt abgefüllt werden kann.

Dosiereinrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben, die aus einem Ausgabebehälter mit einem verschliessbaren Auslass an seiner Unterseite besteht. Als Verschluss dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt.

Die beschriebene Einrichtung eignet sich weniger gut für das Dosieren von Schüttgut in Gefässe mit einem kleinen Öffnungsquerschnitt. Die sich nach oben verjüngende Struktur des Ventilkörpers sowie dessen Rotation ergeben eine Radial- bzw. Horizontalkomponente der Schüttgutpartikel am Auslass und verursachen demzufolge eine Streuung, die selbst über einen relativ breiten Öffnungsquerschnitt eines abzufüllenden Gefässes hinausreichen kann.

Ein Verfahren und eine Vorrichtung zum Austragen einer pulver- oder pastenförmigen Kleinstmengenprobe, beispielsweise für die Atomabsorptionsspektroskopie, offenbart die US 4 905 525 A. In einem Vorratsbehälter mit einer Auslassöffnung am Ende eines Formkanals ragt von oben her ein Stempel in das im Behälter befindliche Probenmaterial. Eine kleine Probenmenge wird durch den Formkanal gepresst und aus der Auslassöffnung ausgetragen, indem der Stempel in das Probenmaterial gedrückt wird, so dass es sich oberhalb des Formkanals verdichtet. In einer speziellen Ausführungsform ist der Behälter zur Auslassöffnung hin trichterförmig ausgebildet und der Stempel ist schräg zur Auslassöffnung angeordnet.

In der DE 198 41 478 A1 ist eine Dosiereinrichtung zum Abfüllen von viskosen, pastösen, pulverförmigen oder granulatförmigen Produkten beschrieben, mit einem Dosierbehälter, der in der für den Betrieb positionierten Dosiereinrichtung sich zu seinem unteren Ende hin verjüngt und eine dort angeordnete Austrittsöffnung aufweist. An einer zentral angeordneten rotierbar ausgestalteten Hohlwelle sind Abstreifwerkzeuge befestigt. Die Dosiereinrichtung verfügt über ein Dosierventil, das eine in der Hohlwelle angeordnete und translatorisch auf und ab bewegbare Ventilstange aufweist, an deren unterem Ende ein kegelförmig sich nach oben verjüngender Ventilkopf angeordnet ist, so dass die Austrittsmenge des Abfüllguts geregelt und die Austrittsöffnung von oben her geschlossen werden kann. In einigen der beschriebenen Ausführungsformen ist auch das Dosierventil rotierbar ausgebildet.

Bei einer Dosiereinrichtung gemäss der DE 198 41 478 A1 oder gemäss der US 5 145 009 A kann die aus dem Behälter auszutragende Menge nicht beliebig klein gehalten werden. Da die Austrittsöffnung ringförmig ist, ist die minimal zum Dosieren verwendbare Breite des Ringspaltes auf mindestens die Ausdehnung einer kleinsten Schüttguteinheit - beispielsweise eines Pulverkorns - begrenzt, wodurch gleichzeitig mehrere Schüttguteinheiten aus dem Ringspalt austreten können. Ferner besteht die Gefahr, dass je nach Beschaffenheit des Schüttgutes ein Teil des Spalts verstopft werden kann. Dies kann insbesondere dann erfolgen, wenn gegen Ende des Dosiervorgangs durch Reduktion der Breite des Ringspalts die Austragungsrate reduziert werden soll, da dabei dessen Breite im Verhältnis zu dessen Länge beziehungsweise Umfang stetig ungünstiger wird.

Aufgabe der Erfindung ist es, eine Dosiereinrichtung zur Verfügung zu stellen, mit welcher Kleinstmengen von pulver- oder pastenförmigen Substanzen gezielt in ein Gefäss eingefüllt werden können.

Diese Aufgabe wird gelöst durch die Merkmale des unabhängigen Anspruchs 1.

Eine Dosiereinrichtung für pulver- oder pastenförmige Substanzen ist mit einem Entnahmegefäss und einem damit verbundenen oder verbindbaren Dosierkopf versehen, der ein Gehäuse aufweist, welches eine mit kreisförmigem Querschnitt versehene Austrittsöffnung besitzt. Ferner weist der Dosierkopf ein Austragungs- und Verschlusselement auf, wobei die Austrittsöffnung und das Austragungs- und Verschlusselement auf der Mittellängsachse des Dosierkopfs angeordnet sind, und das Austragungs- und Verschlusselement relativ zum Gehäuse um die Mittellängsachse rotierbar und entlang der Mittellängsachse translatorisch verschiebbar aus der Austrittsöffnung beziehungsweise in die Austrittsöffnung aus - und einfahrbar ausgestaltet ist. Das Austragungs- und Verschlusselement ist in seiner Grundform zylinderförmig ausgebildet und weist einen dem Verschliessen der Austrittsöffnung dienenden zylinderförmigen Verschlussbereich und einen diesem benachbart angeordneten, der Austragung von zu dosierender Substanz dienenden Austragungsbereich auf. Dieser Austragungsbereich befindet sich im betriebsbereiten Zustand der Dosiereinrichtung im unteren Bereich des Austragungs- und Verschlusselements. Die dort befindliche Endfläche ist gegenüber einer Ebene orthogonal zur Mittellängsachse angeschrägt, wobei der tiefstgelegene Punkt dieser Endfläche, eine Spitze bildend, mit einem Punkt der Zylindermantelfläche zusammenfällt und der höchstgelegene Punkt ebenfalls mit einem Punkt der Zylindermantelfläche zusammenfällt.

Der Austragungsbereich des Austragungs- und Verschlusselements weist eine Form auf, die für ein sich mit seinem Austragungsbereich in der Austrittsöffnung befindliches Austragungs- und Verschlusselement eine aussermittig angeordnete und nicht konzentrisch ausgebildete wirksame Austrittsöffnung, das heisst eine Durchtrittsöffnung, freilässt.

Bei der teilweisen Offenstellung des Austragungs- und Verschlusselements gibt dieses durch die in Bezug auf die Mantelfläche des Verschlussbereichs einseitige Anschrägung des Austragungsbereichs die Durchtrittsöffnung azentrisch frei. Durch eine translatorische Verschiebung des Austragungs- und Verschlusselements entlang der Mittellängsachse der Dosiereinrichtung kann die Durchtrittsöffnung, das heisst ein Bereich der Austrittsöffnung, durch welchen im Dosierbetrieb die auszutragende Substanz aus der Dosiereinrichtung gelangt, kontinuierlich in definierter Weise vergrössert beziehungsweise verkleinert werden. Ausserdem wird ihre Orientierung bezüglich der Mittellängsachse infolge der einseitigen Anschrägung der Austragungsfläche durch Rotation ständig verändert. Diese variable wirksame Austrittsöffnung, oder Durchtrittsöffnung, ermöglicht ein Austragen grösserer oder kleiner Substanzmengen je nach Bedarf. Insbesondere können kleinste Substanzmengen, beispielsweise Pulver im Mikrogrammbereich, ausgetragen werden. Während eines Dosiervorgangs kann somit zunächst bei relativ grosser Durchtrittsöffnung eine grosse Substanzmenge ausgetragen werden und bei Annäherung an eine vorgegebene Zielmenge durch die Translationsbewegung des Austragungs- und Verschlusselements die Durchtrittsöffnung derart verkleinert werden, dass nunmehr noch wenig Substanz ausgetragen wird und das Erreichen der Zielmenge äusserst genau erfolgen kann. Die Durchtrittsöffnung weist somit, sofern die Austrittsöffnung nicht vollständig verschlossen ist, immer einen definierten Querschnitt, optimiert auf die zu dosierende Substanz auf.

Dabei kann die eine Austragungsfläche bildende Endfläche eben sein, oder in mindestens einer Richtung konkav gekrümmt sein, oder konkav gekrümmt und um die Mittellängsachse verwunden ausgeformt sein. Alle genannten Varianten einer Austragungsfläche im Austragungsbereich des Austragungs- und Verschlusselements tragen der kontinuierlichen Verstellbarkeit der Durchtrittsöffnung Rechnung, wobei diese für das Dosieren von Kleinstmengen an pulver- oder pastenförmigen Substanzen eingestellt werden kann.

Das Austragungs- und Verschlusselement der Dosiereinrichtung ist demnach an seinem Austragungsbereich als einseitig angeordnete, auf der Zylindermantelfläche zu liegen kommende Spitze ausgeformt. Diese unterscheidet sich von Austragungs- und Verschlusselementen mit einer rotationssymmetrischen, auf einer Mittellängsachse angeordneten Spitze, wie sie z.B. aus dem Stand der Technik bekannt sind, darin, dass bei einer translatorischen Verschiebung des Austragungs- und Verschlusselements in die beziehungsweises aus der Austrittsöffnung kein ringförmiger Spalt als Durchtrittsöffnung verbleibt, der die minimal austragbare Substanzmenge begrenzen würde.

Der Austragungsbereich kann in Bezug auf die Steilheit seiner eine Austragungsfläche bildenden Endfläche verschieden ausgestaltet sein, das heisst der vom tiefstgelegenen Punkt der Endfläche ausgehende Winkel, welcher von einer parallel zur Mittellängsachse entlang der Zylindermantelfläche verlaufenden Geraden und einer entlang der angeschrägten Endfläche zum höchstgelegenen Punkt der Endfläche verlaufenden Geraden eingeschlossen wird, ist in seiner Grösse variabel.

Im Übrigen wird durch die Rotation des Austragungs- und Verschlusselements auch der Fluss der auszutragenden Substanz erzeugt und aufrechterhalten. Mit den Ausgestaltungen der Austragungsflächen des Austragungs- und Verschlusselements kann unter anderem der Fluss der auszutragenden Substanz gesteuert werden. Die Durchtrittsöffnung, insbesondere ihr Öffnungsquerschnitt, kann somit auf die Gegebenheit des zu dosierenden Materials optimiert werden.

Die Dosiereinrichtung umfasst in einer besonders bevorzugten Weiterbildung ein Zufuhrwerkzeug, welches ebenfalls um die Mittellängsachse rotierbar ausgestaltet ist und zu dosierende Substanz, der Austrittsöffnung zuführt sowie die an der die Austrittsöffnung umgebenden Kante des Gehäuses, im Folgenden als der Rand der Austrittsöffnung bezeichnet, haftende Substanz von dieser löst. Somit verbleibt beim Dosieren keine Substanz in der Austrittsöffnung, welche sich eventuell beim vollständigen Verschliessen derselben nach Beendigung des Dosiervorgangs verklemmen würde und damit das vollständige Verschliessen verunmöglichen könnte. Auch ist es mit dem Zufuhrwerkzeug möglich, stark koagulierende Pulver sowie Pulver mit geladenen Partikeln oder Pasten zu dosieren, indem es diese Substanzen auflockert, der Austrittsöffnung zuführt und vom Rand der Austrittsöffnung abstreift. Das Zufuhrwerkzeug kann auch mittels Federkraft gegen den Rand der Austrittsöffnung gedrückt werden. In bevorzugter Ausfertigung weist es einen Rührteil und ein Zufuhrelement auf, wobei dieses Zufuhrelement in vorteilhafter Ausgestaltung einen flächigen Bereich umfasst und im Betrieb stets lose mit dem Rand der Austrittsöffnung in Kontakt ist. In spezifischer Ausgestaltung besitzt das Zufuhrelement eine Spitze, die im Betrieb den Rand der Austrittsöffnung kontaktiert. Die Position des Zufuhrelements im Zufuhrwerkzeug weist bevorzugt einen spitzen Anstellwinkel in tangentialer Richtung bezüglich der Ebene seiner Kreisbahn bei Rotation um die Mittellängsachse auf und/oder das Zufuhrelement ist unter einem spitzen Winkel gegenüber der Mittellängsachse geneigt.

In einer spezifischen Ausführungsform ist das Austragungs- und Verschlusselement mit einer entlang der Mittellängsachse angeordneten Stange, welche das Entnahmegefäss als Antriebswelle durchdringt, verbunden, wobei das Zufuhrwerkzeug relativ zur Stange und dem Austragungs- und Verschlusselement translatorisch entlang der Mittellängsachse verschiebbar gelagert ist.

In einer besonders bevorzugten Weiterbildung weist der Dosierkopf der Dosiereinrichtung und/oder die Dosiereinrichtung selbst ein Gehäuse auf, welches sich in Richtung zur Austrittsöffnung hin verjüngt

Die Dosiereinrichtung wird anhand von Beispielen, wie sie schematisch in den Zeichnungen dargestellt sind, im Folgenden beschrieben. Es zeigen:
- Figur 1: eine Dosiereinrichtung mit einem auf ein Entnahmegefäss aufgeschraubten Dosierkopf in dreidimensionaler Darstellung;
- Figur 2a: einen Dosierkopf mit einer ersten Ausführungsform des Austragungs- und Verschlusselements in der Offenstellung in dreidimensionaler Darstellung, wobei dessen Gehäuse der Länge nach aufgeschnitten ist;
- Figur 2b: einen Dosierkopf mit einer ersten Ausführungsform des Austragungs- und Verschlusselements in der Geschlossenstellung in dreidimensionaler Darstellung, wobei dessen Gehäuse der Länge nach aufgeschnitten ist;
- Figur 3a: einen Schnitt durch den Dosierkopf aus Figur 2a mit dem Austragungs - und Verschlusselements in der Offenstellung;
- Figur 3b: einen Schnitt durch den Dosierkopf aus Figur 2b, wobei das Austragungs - und Verschlusselements in der Geschlossenstellung gezeigt ist;
- Figur 4: einen Schnitt durch das Austragungs- und Verschlusselement mit Stange in einer zweiten Ausführungsform;
- Figur 5: eine stark schematisierte Sicht von oben in einen Dosierkopf mit einem Austragungs- und Verschlusselement in einer zweiten Ausführungsform wobei dieses im Bereich der Austrittsöffnung geschnitten gezeichnet ist;
- Figur 6a: ein Austragungs- und Verschlusselement in der ersten Ausführungsform, seitlich mit Blick auf die Austragungsfläche;
- Figur 6b: das Austragungs- und Verschlusselement aus Figur 6a, gegenüber der dortigen Darstellung um 90° gedreht;
- Figur 6c: das Austragungs- und Verschlusselement aus Figur 6a in einer dreidimensionalen Darstellung;
- Figur 7a: eine dritte Ausführungsform eines Austragungs- und Verschlusselements seitlich mit Blick auf die Austragungsfläche;
- Figur 7b: das Austragungs- und Verschlusselement aus Figur 7a, gegenüber der dortigen Darstellung um 90° gedreht;
- Figur 7c: das Austragungs- und Verschlusselement in einer dreidimensionalen Darstellung;

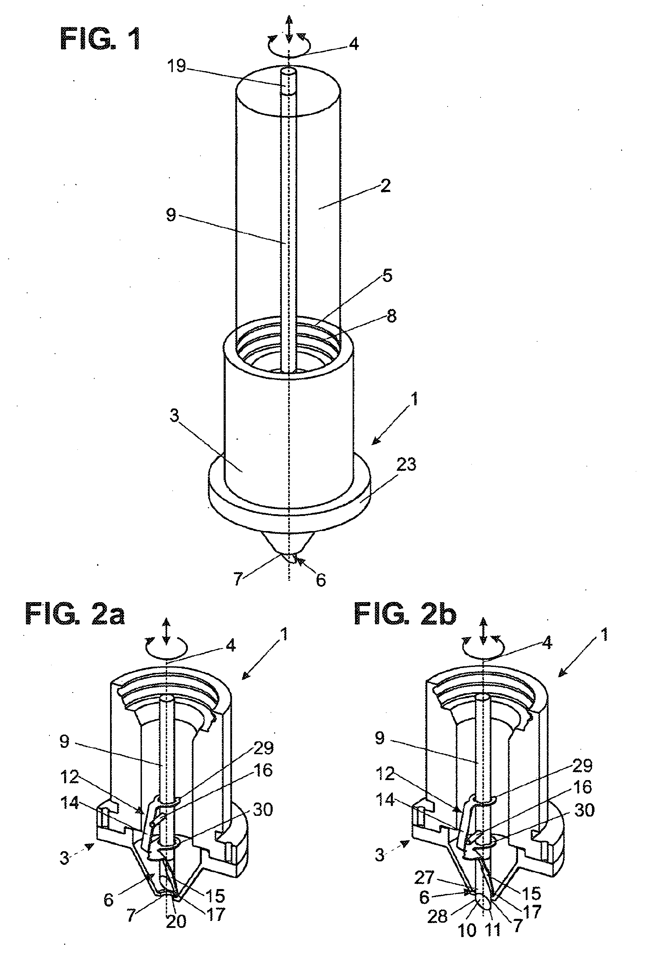

Figur 1 zeigt eine Dosiereinrichtung für pulver- oder pastenförmige Substanzen, welche einen Dosierkopf 1 und ein Entnahmegefäss 2 umfasst. Die Dosiereinrichtung ist im Wesentlichen axialsymmetrisch ausgestaltet und ist in ihrer Betriebsstellung, beispielsweise wenn dosiert werden soll, beziehungsweise im betriebsbereiten Zustand mit ihrer Mittellängsachse 4 in vertikaler Richtung ausgerichtet. Der ein Gehäuse 3 aufweisende Dosierkopf 1 befindet sich in der Figur 1 unterhalb des Entnahmegefässes 2. Er ist auf das Entnahmegefäss 2 aufgesetzt und wurde vor dem Befüllen des Entnahmegefässes mittels eines Innengewindes 5 des Dosierkopfs 1 und eines Aussengewindes 8 des Entnahmegefässes 2 auf dieses aufgeschraubt. Der Dosierkopf kann prinzipiell in jeder aus dem Stand der Technik bekannten Weise trennbar mit dem Entnahmegefäss verbunden sein, oder auch fest mit dem Entnahmegefäss verbunden sein. Zum Zwecke einer erleichterten Reinigung ist jedoch ein aufsetz- und gegebenenfalls aufschraubbarer Dosierkopf 1 vorzuziehen.

Das Gehäuse 3 weist einen Vorsprung 23 auf, der beispielsweise dem Befestigen der Dosiereinrichtung in einem hier nicht gezeigten Halter dient. Das Gehäuse 3 verjüngt sich zur Austrittsöffnung 7 hin, wodurch die zu dosierende Substanz verbessert der Austrittsöffnung 7 zugeleitet wird. Diese Verjüngung, wenngleich bevorzugt, ist jedoch nicht zwingend notwendig.

Eine mit einem Austragungs- und Verschlusselement 6 verbundene Stange 9 durchsetzt - eine Antriebswelle bildend - das Entnahmegefäss 2 und ragt in der Figur 1 mit einem Ende aus dem Entnahmegefäss 2 heraus. Dort weist die Stange 9 einen Kupplungsbereich 19 für eine hier nicht gezeigte Antriebsvorrichtung auf, sei dies ein Handantrieb oder ein motorischer Antrieb.

In der Figur 2a ist ein Dosierkopf 1 mit einer ersten Ausführungsform eines Austragungs- und Verschlusselements 6 in dreidimensionaler Darstellung gezeigt, wobei das Gehäuse 3 des Dosierkopfs 1 der Länge nach aufgeschnitten ist. Der Dosierkopf 1 ist in der Figur 2a mit geöffneter Austrittsöffnung 7 gezeigt. Das Austragungs- und Verschlusselement 6 ist in seiner Grundform zylinderförmig ausgebildet und ist mit der Stange 9, welche sich entlang der Mittellängsachse 4 des Dosierkopfes 1 bzw. der Dosiereinrichtung erstreckt, fest verbunden. Die Stange 9 und damit das Austragungs- und Verschlusselement 6 ist sowohl um die Mittellängsachse 4 rotierbar als auch entlang dieser verschiebbar gestaltet. Dabei wird die Stange 9 vorzugsweise motorisch angetrieben.

Es versteht sich von selbst, dass das Austragungs- und Verschlusselement 6 zusammen mit der Stange 9 auch einstückig ausgebildet sein kann.

Die Figur 2b zeigt den Dosierkopf 1 in gleicher Darstellung, wie die Figur 2a, wobei in der Figur 2b die Austrittsöffnung 7 durch das Austragungs- und Verschlusselement 6 vollständig verschlossen ist. Das Öffnen und Schliessen der Austrittsöffnung 7 erfolgt durch ein Verschieben des Austragungs- und Verschlusselements 6 entlang der Mittellängsachse 4, d.h. in den Figuren 2a und 2b in vertikaler Richtung.

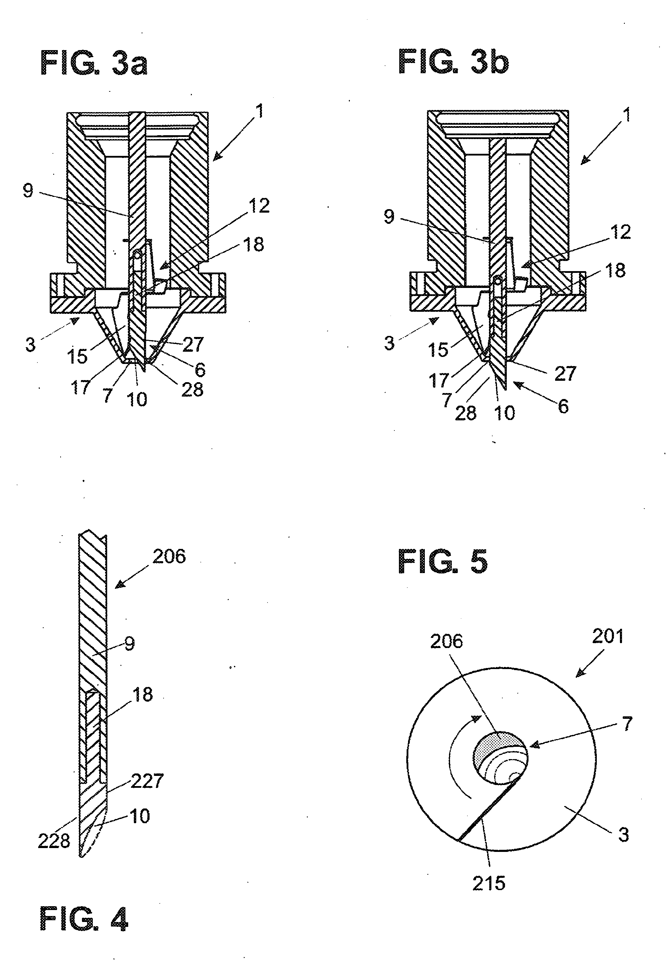

Das Austragungs- und Verschlusselement 6 weist einen Verschlussbereich 27 auf, welcher zylinderförmig ausgestaltet ist, und im Fall der Geschlossenstellung (siehe Figur 2b) passgenau die Austrittsöffnung 7 verschliesst. Im Fall des Dosierens ist die Austrittsöffnung 7 entweder ganz geöffnet, wie es die Figur 2a zeigt, oder zumindest teilweise geöffnet (siehe Figur 3a), und bildet so eine Durchtrittsöffnung, welche einer wirksamen Austrittsöffnung entspricht. In letzterem Fall ragt ein dem Verschlussbereich 27 benachbart angeordneter der Austragung von zu dosierender Substanz dienender Austragungsbereich 28 des Austragungs- und Verschlusselements 6 in die Austrittsöffnung 7 hinein.

Der sich im betriebsbereiten Zustand der Dosiereinrichtung im unteren Bereich des Austragungs- und Verschlusselements 6 befindende Austragungsbereich 28 weist eine Endfläche auf, welche gegenüber einer Ebene orthogonal zur Mittellängsachse 4 schräg verläuft. Dabei wird eine Austragungsfläche 10 gebildet, wobei in der in den Figuren 2a und 2b gezeigten Ausführungsform des Austragungs- und Verschlusselements 6 der tiefstgelegene Punkt der Endfläche, eine Spitze 11 bildend, mit einem Punkt der Zylindermantelfläche zusammenfällt und der höchstgelegene Punkt ebenfalls mit einem Punkt der Zylindermantelfläche zusammenfällt.

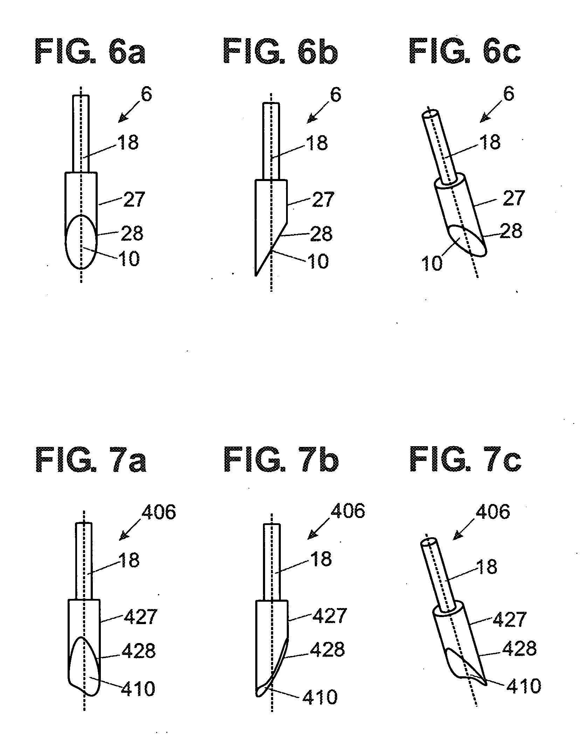

Die Austragungsfläche 10 ist in der hier gezeigten Darstellung als ebene Fläche gezeichnet. Sie kann jedoch auch als eine in einer oder in zwei Dimensionen, also orthogonal zueinander verlaufenden Richtungen, nach innen gewölbte, das heisst als konkave Fläche ausgebildet sein. Ferner ist eine Austragungsfläche denkbar, welche eine konkave Wölbung nach innen in einer beliebigen Richtung oder in zwei nicht zueinander orthogonalen Richtungen, also beliebigen Richtungen, besitzt (siehe z.B. Figuren 7a bis 7c).

Zum Dosieren, das heisst im geöffneten Zustand der Austrittsöffnung 7 ist das Austragungs- und Verschlusselement 6 entweder vollständig aus der Austrittsöffnung 7 zurückgezogen, was einer vollständigen Offenstellung entspricht, oder es ragt mit seinem Austragungsbereich 28, also mit dem Bereich, der die Austragungsfläche 10 umfasst, teilweise in die Austrittsöffnung 7 hinein und lässt eine Durchtrittsöffnung für den Durchtritt der zu dosierenden Substanz frei. Um jedoch die Austrittsöffnung 7 vollständig zu verschliessen muss das Austragungs- und Verschlusselement 6 ausserhalb des Bereichs mit der Austragungsfläche 10, namentlich im Verschlussbereich 27 in die Austrittsöffnung 7 hineinragen. Dabei besitzt Letztere einen Durchmesser, der dem Durchmesser des Austragungs- und Verschlusselements 6 im Verschlussbereich 27 entspricht, so dass ein passgenaues Ein- und Ausfahren des Austragungs- und Verschlusselements 6 in die bzw. aus der Austrittsöffnung 7 und damit ein vollständiges Verschliessen derselben möglich ist. Ist das Austragungs- und Verschlusselement 6 in seinem Austragungsbereich 28 in die Austrittsöffnung 7 eingefahren, so ist diese gegenüber der vollständigen Offenstellung verkleinert. Damit kann die Austragung von pulver- oder pastenförmiger Substanz gezielt gesteuert werden, indem jeweils der Austragungsbereich 28 des Austragungs- und Verschlusselements 6 mehr oder weniger tief in die Austrittsöffnung 7 hinein ragt und damit eine in ihrer Grösse variable Durchtrittsöffnung bildet. Für gut rieselfähiges feinkörniges Pulver kann mit dem beschriebenen Dosierkopf 1 ein Volumenstrom erreicht werden, welcher Dosierungen im Mikrogrammbereich ermöglicht. Zur Bestimmung der ausgetragenen Substanzmenge wird bevorzugt eine - hier nicht dargestellte, da nicht Gegenstand der Erfindung - Waage verwendet.

Für den Fall des Dosierens von pulverförmigen Substanzen, die eine schlechte Rieselfähigkeit besitzen, also beispielsweise pappige Pulver, oder für das Dosieren pastenförmiger Substanzen, ist ein Zufuhrwerkzeug 12 innerhalb des Dosierkopfs 1 angeordnet. Dieses weist eine Haltevorrichtung auf, mit welcher es die Stange 9 an zwei übereinander angeordneten Positionen ringförmig umgreift, wodurch das Zufuhrwerkzeug 12 mit der Stange 9 lose verbunden ist. Ferner besitzt das Zufuhrwerkzeug 12 ein Rührteil 14 und ein Zufuhrelement 15. Der in den Figuren 2a und 2b gezeigte obere Haltering 29 der Haltevorrichtung des Zufuhrwerkzeugs 12 ist oberhalb eines mit der Stange 9 fest verbundenen Querbolzens 16 angeordnet, der untere Haltering 30 unterhalb des Querbolzens 16. Damit ist das Zufuhrwerkzeug 12 in der Dosiervorrichtung geführt. Beim translatorischen Verschieben der Stange 9 entlang der Mittellängsachse 4, wenn die Austrittsöffnung 7 geöffnet oder geschlossen werden soll, ist durch die lose Verbindung des Zufuhrwerkzeugs 12 mit der Stange 9 gewährleistet - hier vermittels Wirkung der Schwerkraft -, dass das Zufuhrwerkzeug 12 stets in losem Kontakt mit der die Austrittsöffnung umgebenden Kante 20 des Gehäuses 3, im Folgenden als der Rand der Austrittsöffnung 7 bezeichnet, bleibt. Ausserdem bewirkt ein bei Rotation der Stange 9 entstehender Kontakt des Querbolzens 16 mit dem Rührteil 14, dass sich das Zufuhrwerkzeug 12 mitdreht.

Das Rührteil 14 dient der Auflockerung der zu dosierenden Substanz, während sie sich im Bereich des Dosierkopfs 1 befindet.

Das Zufuhrelement 15 befindet sich, wie bereits erwähnt, auch in der Offenstellung des Austragungs- und Verschlusselements 6 in Kontakt zum Rande der Austrittsöffnung 7, wodurch beim Drehen desselben die zu dosierende Substanz der Durchtrittsöffnung zugeführt wird, und anhaftende Partikel abgelöst werden und somit das Dosiergut ausgetragen wird. Das Zufuhrelement 15 umfasst vorzugsweise einen flächigen Bereich, der eine dem Rande der Austrittsöffnung 7 zugewandte Spitze 17 aufweist, wobei diese lose mit dem Rand der Austrittsöffnung 7 in Kontakt ist. Das Zufuhrelement 15, beziehungsweise dessen flächiger Bereich, weist bevorzugt eine gewölbte oder gekrümmte Form auf, wodurch das Zufuhrelement 15 stark koagulierendes Pulver schaufelartig mitnehmen und der Austrittsöffnung 7 zuführen kann.

Infolge der Rotation des Zufuhrwerkzeugs 12 um die Mittellängsachse 4, bewegt sich das Zufuhrelement 15 auf einer Kreisbahn. Es hat sich als vorteilhaft erwiesen, wenn die Position des Zufuhrelements 15 einen spitzen Anstellwinkel in tangentialer Richtung bezüglich seiner Kreisbahn bei Rotation um die Mittellängsachse 4 aufweist und/oder wenn das Zufuhrelement 15 unter einem spitzen Anstellwinkel gegenüber der Mittellängsachse 4 geneigt ist. Insbesondere ist der Anstellwinkel des Zufuhrelements der Konsistenz der auszutragenden Substanz angepasst. Aufgrund der Form und Ausrichtung des Zufuhrwerkzeugs 12 ist für die in den Figuren 2a und 2b gezeigten Ausführungsform der Dosiervorrichtung die Drehrichtung des Austragungs- und Verschlusselements 6 und damit hier auch des Zufuhrwerkzeugs 12, vorgegeben. Es erfolgt eine Drehung im Uhrzeigersinn.

Wie bereits oben erwähnt ist das Zufuhrwerkzeug 12 derart an der Stange 9 gelagert beziehungsweise geführt, dass es sich einerseits mit dieser mit dreht, andererseits aber bei einer Verschiebung der Stange 9 entlang der Mittellängsachse relativ zu dieser beziehungsweise zum Austragungs- und Verschlusselement 6 seine Position beibehält, das heisst mit dem Zufuhrelement 15, insbesondere seiner Spitze 17 stets in losem Kontakt mit dem Rand der Austrittsöffnung 7 steht und so das Pulver beim Austragen gegen diesen führt, nach unten drückt und vom Rand abstreift. Dies ist in den Figuren 3a und 3b dargestellt, welche eine Schnittzeichnung des Dosierkopfs zeigen.

In der für die Figuren 3a und 3b gewählten Darstellung ist auch die Verbindung des Austragungs- und Verschlusselements 6 mit der Stange 9 zu erkennen. Dabei greift ein Bolzen 18 mit gegenüber dem Durchmesser des Austragungs- und Verschlusselements 6 verringertem Durchmesser in die Stange 9 ein und ist beispielsweise mit dieser verschraubt, verklebt, verlötet oder in sonstiger Weise fest verbunden.

Eine zweite Form eines Austragungs- und Verschlusselements 206 ist in der Figur 4 in einer Schnittzeichnung zu sehen. Dieses ist mittels eines Bolzens 18, insbesondere eines Schraubbolzens an der Stange 9 befestigt. Die vermittels der schrägen Endfläche des Austragungs- und Verschlusselements 206 gebildete Austragungsfläche 210 weist eine konkave Krümmung auf. Eine konkave Krümmung der Austragungsfläche 210 bewirkt, dass die auszutragende Substanz beim Rotieren des Austragungs- und Verschlusselements 206 gezielt von der Austragungsfläche 210 mitgenommen und ausgetragen wird. Die ist besonders günstig im Fall von koagulierenden Substanzen, die möglicherweise bei einer Austragungsfläche 210 ohne Krümmung sich zwischen dem Rand der Austrittsöffnung 7 und der Austragungsfläche festsetzen könnten und somit die Durchtrittsöffnung verstopfen könnten.

Die Figur 5 zeigt stark schematisiert eine Sicht von oben in den Dosierkopf 201, wobei das Austragungs- und Verschlusselement 206 im Bereich der Austrittsöffnung 7 geschnitten gezeigt ist. Dadurch wird die Form der jeweiligen Durchtrittsöffnung erkennbar. Vom Zufuhrwerkzeug ist in der Figur 5 ein Zufuhrelement 215 sichtbar, welches der einfachen Illustration halber als ein von ebenen Flächen begrenztes Blech in der seitlichen Aufsicht gezeichnet ist, wobei das Zufuhrelement 215 unter einem spitzen Winkel zum Radius seiner Kreisbahn, ausgerichtet, den Rand der Austrittsöffnung 7 tangential berührt und somit bei Rotation (siehe Pfeil) des Austragungs- und Verschlusselements 206 die auszutragende Substanz der jeweiligen Durchtrittsöffnung zuführt.

Wie bereits oben erwähnt, kann die Ausrichtung eines Zufuhrelements in Bezug auf die Mittellängsachse 4 auch einen spitzen Anstellwinkel in tangentialer Richtung bezüglich seiner Kreisbahn bei Rotation um die Mittellängsachse 4 aufweisen und/oder unter einem spitzen Anstellwinkel gegenüber der Mittellängsachse 4 geneigt sein, wobei diese Winkel je nach zu dosierender Substanz variiert werden können, beispielsweise durch Austausch des Zufuhrwerkzeugs in der Dosiereinrichtung.

Die Austrittsöffnung 7 ist teilweise durch das Austragungs- und Verschlusselements 206 (links oben in der Figur) verschlossen. Der freie Bereich bildet die Durchtrittsöffnung. Mittels gestrichelter Linien sind - von links oben nach rechts unten in der Figur - weitere eine Durchtrittsöffnung begrenzende Positionierungen des Austragungs- und Verschlusselements 206 angedeutet. Es versteht sich von selbst, dass diese lediglich repräsentativ für eine kontinuierliche Variation der Durchtrittsöffnung stehen.

In den Figuren 6a bis 6c ist das Austragungs- und Verschlusselement 6 aus den Figuren 2a und 2b in verschiedenen Ansichten gezeigt. Dargestellt ist das Austragungs- und Verschlusselement 6 mit dem Bolzen 18 zur Befestigung in der Stange 9. Figur 6a zeigt das Austragungs- und Verschlusselement 6 von der Seite mit Blick auf die Austragungsfläche 10, Figur 6b selbiges in gegenüber der Darstellung von Figur 6a um 90° gedreht und Figur 6c das Austragungs- und Verschlusselement 6 in einer dreidimensionalen Darstellung.

Die Figuren 7a bis 7c zeigen eine dritte Ausgestaltung eines Austragungs- und Verschlusselements 406 mit einer ebenfalls seitlich an der Zylindermantelfläche angeordneten Spitze, wobei der Austragungsbereich 428 eine in zwei Richtungen konkav geformte Austragungsfläche 410 mit einer leichten Verwindung derselben um die Mittellängsachse besitzt. Diese Ausgestaltung der Austragungsfläche 410 hat den Vorteil, dass sie die auszutragende Substanz der Austrittsöffnung 7 zuführt. Das Austragungs- und Verschlusselement 406 ist in den Figuren 7a bis 7c in verschiedenen Ansichten dargestellt; Figur 7a seitlich mit Blick auf die Austragungsfläche 410, Figur 7b gegenüber der Darstellung von Figur 7a um 90° gedreht, Figur 7c in einer dreidimensionalen Darstellung.

Varianten des Gehäuses des Dosierkopfs ebenso wie verschiedene Ausführungsformen des Antriebs sind vorstellbar. Ebenso kann das Zufuhrwerkzeug in unterschiedlicher Weise ausgebildet sein, zum Beispiel in Form eines elastischen, bevorzugt mit einer Schraubfeder versehenen Draht- oder Kunststoffbügels. Prinzipiell kann das Zufuhrwerkzeug auch einen eigenen Antrieb haben und unabhängig vom Austragungs- und Verschlusselement sowohl translatorisch als auch rotatorisch bewegt werden.

Die Stange mit dem Austragungs- und Verschlusselement kann in weiterer Ausgestaltung in translatorischer Richtung vorgespannt sein, so dass bei entkoppeltem Antrieb die Austrittsöffnung selbsttätig verschlossen wird.

### Bezugszeichenliste

| | |
|---|---|
| 1 , 201 | Dosierkopf |
| 2 | Entnahmegefäss |
| 3 | Gehäuse |
| 4 | Mittellängsachse |
| 5 | Innengewinde |
| 6, 206, 406 | Austragungs- und Verschlusselement |
| 7 | Austrittsöffnung |
| 8 | Aussengewinde |
| 9 | Stange |
| 10,210,410 | Austragungsfläche |
| 11 | Spitze des Austragungs- und Verschlusselements |
| 12 | Zufuhrwerkzeug |
| 14 | Rührteil |
| 15, 215 | Zufuhrelement |
| 16 | Querbolzen |
| 17 | Spitze des Zufuhrelements |
| 18 | Bolzen |
| 19 | Kupplungsbereich |
| 20 | Kante |
| 23 | Vorsprung |
| 27,227,427 | Verschlussbereich |
| 28, 228, 428 | Austragungsbereich |
| 29 | Oberer Haltering |
| 30 | Unterer Haltering |

## Patentansprüche

1. Dosiereinrichtung für pulver- oder pastenförmige Substanzen mit einem Entnahmegefäss (2) und einem damit verbundenen oder verbindbaren Dosierkopf (1, 201), der ein Gehäuse (3) mit einer mit kreisförmigem Querschnitt versehenen Austrittsöffnung (7) und ein Austragungs- und Verschlusselement (6, 206, 406) aufweist, wobei die Austrittsöffnung (7) und das Austragungs- und Verschlusselement (6, 206 406) auf der Mittellängsachse (4) des Dosierkopfs (1) angeordnet sind, und wobei das Austragungs- und Verschlusselement (6, 206, 406) relativ zum Gehäuse (3) um die Mittellängsachse (4) rotierbar und entlang der Mittellängsachse (4) translatorisch verschiebbar zumindest teilweise aus der Austrittsöffnung (7) beziehungsweise in die Austrittsöffnung (7) aus- und einfahrbar ausgestaltet ist, **dadurch gekennzeichnet, dass** das Austragungs- und Verschlusselement (6, 206, 406) in seiner Grundform zylinderförmig ausgebildet ist und einen dem Verschliessen der Austrittsöffnung (7) dienenden zylinderförmigen Verschlussbereich (28, 228, 428) und einen diesem benachbart angeordneten der Austragung von zu dosierender Substanz dienenden Austragungsbereich (27, 227, 427) aufweist, welcher Austragungsbereich (27, 227, 427) sich im betriebsbereitem Zustand der Dosiereinrichtung im unteren Bereich des Austragungs- und Verschlusselements (6, 206, 406) befindet, welcher eine Endfläche aufweist, die gegenüber einer Ebene orthogonal zur Mittellängsachse (4) schräg verläuft, wobei der tiefstgelegene Punkt dieser Endfläche, eine Spitze bildend, mit einem Punkt der Zylindermantelfläche zusammenfällt und der höchstgelegene Punkt ebenfalls mit einem Punkt der Zylindermantelfläche zusammenfällt.

2. Dosiereinrichtung nach Anspruch 1, **dadurch gekennzeichnet, dass** die Endfläche, eine Austragungsfläche (10) zum Austragen des Dosierguts bildend, eine ebene Fläche ist.

3. Dosiereinrichtung nach Anspruch 1, **dadurch gekennzeichnet, dass** die Endfläche, eine Austragungsfläche (210, 410) zum Austragen des Dosierguts bildend, in einer oder in zwei Richtungen konkav gekrümmt ausgeformt ist.

4. Dosiereinrichtung nach Anspruch 3, **dadurch gekennzeichnet, dass** die Austragungsfläche (410) um die Mittellängsachse (4) verwunden ausgeformt ist.

5. Dosiereinrichtung nach einem der Ansprüche 1 bis 4, **dadurch gekennzeichnet, dass** der vom tiefstgelegene Punkt der Endfläche ausgehende Winkel, welcher von einer parallel zur Mittellängsachse (4) entlang der Zylindermantelfläche verlaufenden Geraden und einer entlang der angeschrägten Endfläche zum höchstgelegenen Punkt der Endfläche verlaufenden Geraden eingeschlossen wird, in seiner Grösse veränderbar ist.

6. Dosiereinrichtung nach einem der Ansprüche 1 bis 5, **dadurch gekennzeichnet, dass** das Austragungs- und Verschlusselement (6, 206, 406) mit einer entlang der Mittellängsachse (4) angeordneten Stange (9), welche das Entnahmegefäss (2) als Antriebswelle durchdringt, verbunden ist.

7. Dosiereinrichtung nach einem der Ansprüche 1 bis 6, **dadurch gekennzeichnet, dass** ein der Zufuhr von zu dosierender Substanz dienendes Zufuhrwerkzeug (12) vorhanden ist, welches um die Mittellängsachse (4) rotierbar ausgestaltet ist und relativ zum Austragungs- und Verschlusselement (6, 206, 406) translatorisch entlang der Mittellängsachse (4) verschiebbar gelagert ist.

8. Dosiereinrichtung nach Ansprüchen 6 und 7, **dadurch gekennzeichnet, dass** das Zufuhrwerkzeug (12) an der Stange (9) und relativ zu dieser translatorisch entlang der Mittellängsachse (4) verschiebbar gelagert und/oder geführt ist.

9. Dosiereinrichtung nach Anspruch 7 oder 8, **dadurch gekennzeichnet, dass** das Zufuhrwerkzeug (12) ein Rührteil (14) und ein Zufuhrelement (15) aufweist, wobei das Zufuhrelement (15, 415) im Betrieb der Dosiereinrichtung stets mit dem Rand der Austrittsöffnung (7) in losem Kontakt ist.

10. Dosiereinrichtung nach einem der Ansprüche 1 bis 9, **dadurch gekennzeichnet, dass** das Gehäuse (3) sich in Richtung zur Austrittsöffnung (7) verjüngt.

## Claims

1. Dosage-dispensing device for substances in powder- or paste form with a supply container (2) and with a dosage-dispensing head (1, 201) that is connected or connectable to the supply container (2), said dosage-dispensing head (1, 201) comprising a housing (3) with an outlet orifice (7) of circular cross-section and a delivery- and closure element (6, 206, 406), wherein the outlet orifice (7) and the delivery- and closure element (6, 206, 406) are arranged on the central lengthwise axis (4) of the dosage-dispensing head (1), and the delivery- and closure element (6, 206, 406) is designed to be rotatable about the central lengthwise axis (4) in relation to the housing (3) and to be capable of translatory displacement along the central lengthwise axis (4) so that the delivery- and closure element (6, 206, 406) can be moved at least partially out of, as well as into, the outlet orifice (7), **characterized in that** the delivery- and closure element (6, 206, 406) in its basic configuration is of a cylindrical shape and has a cylindrical closure portion (27, 227, 427) that serves to close off the outlet orifice (7) and, adjacent to the closure portion, a delivery portion (28, 228, 428) that serves to deliver the substance to be dispensed, wherein when the dosage-dispensing device is in its operating state, the delivery portion (28, 228, 428) is located in the lower part of the delivery- and closure element (6, 206, 406), said lower part having an end surface that is inclined at an oblique angle relative to a plane that extends orthogonal to the central lengthwise axis (4), wherein said end surface at its lowest point forms a tip that coincides with a point of the cylindrical surface, and the topmost point likewise coincides with a point of the cylindrical surface.

2. Dosage-dispensing device according to claim 1, **characterized in that** said end surface is a planar surface, forming a delivery surface (10) for delivering the material to be dispensed.

3. Dosage-dispensing device according to claim 1, **characterized in that** said end surface is shaped with a concave curvature in one or in two directions, forming a delivery surface (210, 410) for delivering the material to be dispensed.

4. Dosage-dispensing device according to claim 3, **characterized in that** the delivery surface (410) is shaped with a twist about the central lengthwise axis (4).

5. Dosage-dispensing device according to one of the claims 1 to 4, **characterized in that** said end surface is variable relative to the magnitude of the angle which has its apex at the lowest point of the end surface and is enclosed by a line on the cylindrical surface that runs parallel to the central lengthwise axis (4) and a line that runs along the slanted end surface to the topmost point of the end surface.

6. Dosage-dispensing device according to one of the claims 1 to 5, **characterized in that** the delivery- and closure element (6, 206, 406) is connected to a rod (9) that is arranged along the central longwise axis (4) and traverses the supply container (2) as a drive shaft.

7. Dosage-dispensing device according to one of the claims 1 to 6, **characterized in that** a conveying tool (12) is provided, serving to convey material that is to be dispensed, which conveying tool (12) is configured to be rotatable about the central lengthwise axis (4) and is supported in a way that allows translatory movement of the conveying tool (12) relative to the delivery- and closure element (6, 206, 406) along the central lengthwise axis (4).

8. Dosage-dispensing device according to claims 6 and 7, **characterized in that** the conveying tool (12) is supported and/or guided on the rod (9) with translatory mobility relative to the rod (9) along the central lengthwise axis (4).

9. Dosage-dispensing device according to claim 7 or 8, **characterized in that** the conveying tool (12) comprises a stirrer element (14) and a conveying element (15), wherein when the dosage-dispensing device is in operation, the conveying element (15, 415) is always in loose contact with the delivery orifice (7).

10. Dosage-dispensing device according to one of the claims 1 to 9, **characterized in that** the housing (3) is narrowed down in the direction towards the outlet orifice (7).

## Revendications

1. Dispositif de dosage pour des substances sous forme de poudre ou de pâte comprenant un récipient de prélèvement (2) et une tête de dosage (1, 201) reliée ou pouvant être reliée à ce récipient, laquelle tête présente un boîtier (3) avec une ouverture de sortie (7) dotée d'une section circulaire et un élément d'évacuation et de fermeture (6, 206, 406), l'ouverture de sortie (7) et l'élément d'évacuation et de fermeture (6, 206, 406) étant disposés sur l'axe longitudinal médian (4) de la tête de dosage (1), et l'élément d'évacuation et de fermeture (6, 206, 406) étant conçu de façon à pouvoir tourner par rapport au boîtier (3) autour de l'axe longitudinal médian (4) et à pouvoir coulisser par translation le long de l'axe longitudinal médian (4) et de façon à pouvoir sortir et entrer au moins partiellement de l'ouverture de sortie (7) et dans l'ouverture de sortie (7), **caractérisé en ce que** l'élément d'évacuation et de fermeture (6, 206, 406) est conçu cylindrique dans sa forme de base et présente une zone de fermeture (28, 228, 428) de forme cylindrique, servant à la fermeture de l'ouverture de sortie (7), et une zone d'évacuation (27, 227, 427) disposée à proximité de cette zone et servant à l'évacuation de la substance à doser, laquelle zone d'évacuation (27, 227, 427) se trouve dans la zone inférieure de l'élément d'évacuation et de fermeture (6, 206, 426) lorsque le dispositif de dosage est dans l'état opérationnel, laquelle zone présente une surface d'extrémité qui est agencée en biais par rapport à un plan perpendiculairement à l'axe longitudinal médian (4), le point le plus bas de cette surface d'extrémité, formant une pointe, coïncidant avec un point de la surface d'enveloppe cylindrique et le point le plus haut coïncidant également avec un point de la surface d'enveloppe cylindrique.

2. Dispositif de dosage selon la revendication 1, **caractérisé en ce que** la surface d'extrémité, formant une surface d'évacuation (10) pour l'évacuation de l'article à doser, est une surface plane.

3. Dispositif de dosage selon la revendication 1, **caractérisé en ce que** la surface d'extrémité, formant une surface d'évacuation (210, 410) pour l'évacuation de l'article à doser, est formée avec une courbure concave dans une ou dans deux directions.

4. Dispositif de dosage selon la revendication 3, **caractérisé en ce que** la surface d'évacuation (410) est formée de façon tordue autour de l'axe longitudinal médian (4).

5. Dispositif de dosage selon l'une des revendications 1 à 4, **caractérisé en ce que** l'angle, partant du point le plus bas de la surface d'extrémité, qui est formé par une droite agencée parallèlement à l'axe longitudinal médian (4) le long de la surface d'enveloppe cylindrique et par une droite agencée le long de la surface d'extrémité chanfreinée vers le point le plus haut de la surface d'extrémité, est variable dans sa grandeur.

6. Dispositif de dosage selon l'une des revendications 1 à 5, **caractérisé en ce que** l'élément d'évacuation et de fermeture (6, 206, 406) est relié à une barre (9) disposée le long de l'axe longitudinal médian (4), laquelle barre pénètre le récipient de prélèvement (2) comme arbre d'entraînement.

7. Dispositif de dosage selon l'une des revendications 1 à 6, **caractérisé en ce qu'**un outil d'alimentation (12) servant à l'alimentation de la substance à doser est présent, lequel outil est conçu de façon à pouvoir tourner autour de l'axe longitudinal médian (4) et est monté de façon à pouvoir coulisser par rapport à l'élément d'évacuation et de fermeture (6, 206, 406) par translation le long de l'axe longitudinal médian (4).

8. Dispositif de dosage selon les revendications 6 et 7, **caractérisé en ce que** l'outil d'alimentation (12) est monté et/ou guidé sur la barre (9) et de façon à pouvoir coulisser par rapport à cette barre par translation le long de l'axe longitudinal médian (4).

9. Dispositif de dosage selon la revendication 7 ou 8, **caractérisé en ce que** l'outil d'alimentation (12) présente une partie agitatrice (14) et un élément d'alimentation (15), l'élément d'alimentation (15, 415) étant toujours en contact libre avec le bord de l'ouverture de sortie (7) lorsque le dispositif de dosage est en service.

10. Dispositif de dosage selon l'une des revendications 1 à 9, **caractérisé en ce que** le boîtier (3) se rétrécit en direction de l'ouverture de sortie (7).
